(19) Europäisches Patentamt
European Patent Office
Office européen des brevets

(11) EP 3 330 481 A1

(12) EUROPEAN PATENT APPLICATION

(43) Date of publication:
06.06.2018 Bulletin 2018/23

(51) Int Cl.:
E21B 47/022 (2012.01)      E21B 47/09 (2012.01)
E21B 7/04 (2006.01)        G01V 1/42 (2006.01)

(21) Application number: 17158446.9

(22) Date of filing: 06.06.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 06.06.2013  GB 201310099
06.06.2013  NO 20130796

(62) Document number(s) of the earlier application(s) in
accordance with Art. 76 EPC:
14732116.0 / 3 004 537

(71) Applicant: ROCKSEIS AS
7491 Trondheim (NO)

(72) Inventors:
• ARNTSEN, Børge
7125 Vanvikan (NO)
• SANGESLAND, Sigbjørn
7075 Tiller (NO)
• JOHANSEN, Ståle Emil
7224 Melhus (NO)

(74) Representative: Taylor, Adam David
Dehns
St Bride's House
10 Salisbury Square
London EC4Y 8JD (GB)

(54) DRILLING METHOD AND APPARATUS

(57) A method of locating a drilling apparatus comprising a drill string and a drill bit and/or a borehole in a subterranean region, comprising the steps of: (A) transmitting seismic waves into the subterranean region during a subterranean drilling operation, the seismic waves being transmitted from a location remote from said drill string; (B) detecting a seismic response from said drilling apparatus or borehole; and (C) comparing said detected response with predetermined seismic survey data of said subterranean region to determine the location of said apparatus or borehole.

Fig. 1

**Description**

The present invention relates to a method and apparatus for sub-surface or subterranean drilling. The invention has particular, but not exclusive, applications in the fields of exploration and extraction of hydrocarbons and also in relief well drilling.

Hydrocarbon accumulations or reservoirs are conventionally located using various geophysical survey techniques. These surveys identify rock formations that are likely to hold valuable oil and gas reserves.

A conventional way surveys are conducted is to transmit a seismic wave through the rock and to measure the reflected waves received at one or a number of spaced apart receivers at the earth surface or at the seafloor (geophones or hydrophones respectively). This is typically conducted from survey ships on the sea surface or using land based emitters and receiver. The varying rock layers and formations interfere with the propagation of the waves, for example by reflecting or attenuating them. The reflected wave data can be interpreted by geophysicists to create a geological model of the region being surveyed. Once the survey data has been analysed for potential formations of interest, test boreholes or wells are drilled in the hope of locating hydrocarbon reserves.

Extracting the hydrocarbons is performed in two stages. First, the exploratory or test well is drilled based on the survey data. The formation is penetrated to determine if hydrocarbons are present. If so, a second production well is drilled and lined thereby allowing the hydrocarbons to be extracted from the subterranean reservoir. In each well drilling process (exploratory or production) determining the position of the drill bit as it extends towards the geological feature of interest is critical for a number of reasons. For example, it is important to ensure that the geological feature is penetrated at an appropriate position. This can minimise drilling time. Another important consideration is avoiding geo-hazards which can damage the drilling apparatus or disrupt the drilling process.

Relief well drilling is another particularly challenging process where accurately locating the drilling apparatus is essential for the fast and safe kill of a blown out well (discussed in more detail below).

It is difficult to accurately measure the location of the drill bit because of the overall diameter of the well. Typically a well is 90-100 cm in diameter at the top of the well, but is reduced to only 20cm at the bottom of the well and may extend thousands of metres below the surface and quite often several kilometres horizontally from the point at which the well penetrated the ocean floor (taking sub-sea drilling as an example).

Various techniques are employed in the art which indicate the location and path of the drill bit and drill string. One common approach is to monitor the drilling operation using Logging While Drilling (LWD) measurement techniques. Here, data is transmitted from the down-hole assembly along the drill string to the surface where the data can be interpreted to determine the location of the drill bit. For example, measuring the direction (inclination and azimuth) of the drill bit in combination with the length of the drill string over time allows the path of the drill bit and string to be predicted. As the drill bit extends through the rock formations data is logged and the path predicted.

The down-hole assembly may be fitted with various sensors which can take measurements and relay data back along the drill string. Comparing the data received from the down hole assembly against the expected formations measured from the initial survey provide drill operators with positional data which allows them to approach formations of interest at very long distances from the drill rig or ship.

Although the systems available in the art are accurate and widely accepted in the oil exploration industry, the inventors of the present invention have determined that a significant improvement in drilling technology can be realised. In particular, the inventors have established a means to measure and visualise, in real time, the location and path of a wellbore through a geological feature as opposed to the current method which merely estimates or predicts the bit position.

An object of the present invention is to provide a surprising and significant improvement in drilling accuracy which allows for improved safety and efficiency and has a number of applications.

Viewed from a first aspect of an invention described herein there is provided a method of locating a drilling apparatus and/or a borehole in a subterranean region, comprising the steps of transmitting seismic waves into the subterranean region during a subterranean drilling operation, the seismic waves being transmitted from a location remote from said drilling apparatus; detecting a seismic response from the drilling apparatus or borehole; and comparing said detected response with predetermined seismic survey data of said subterranean region to determine the location of said apparatus or borehole.

The borehole of this aspect may be the borehole being generated by the ongoing drilling, or it may be a second borehole, for example an existing borehole that it is desired to hit with a new borehole being created by the drilling apparatus. It can be a significant advantage to be able to do this, for example when there has been a blowout and it is required to navigate a new borehole to the blowout well. In this circumstance real time data on the location of the existing and/or the new boreholes is of course of great benefit.

As described above, the conventional way in which the progress of a drilling operation is assessed is to receive data through the drill string (for example orientation/angle) and compare this with the length of the string (a known distance of drill string will have been introduced into the well) and seismic survey data converted to depth data from a pre-exploratory drilling survey. These known techniques have, to date, provided the best and most accurate means to monitor the progress of a drilling operation.

However, these available systems still have their limitations. The main uncertainty is that the seismic data measures depth to (for example) a reservoir target in two-way travel time (the seismic signal travels down then back up) for the seismic waves. When drilling a well to the same target the distance must be known in meters. This depth must therefore be calculated from the acoustic velocity of the rocks and the two-way travel time for the seismic waves. Since the exact velocity of the rocks is uncertain the depth measured in meters will also be uncertain.

For this reason it can in many cases be difficult to hit the target precisely. In particular the depth to target is often miscalculated. The cost of drilling is exceedingly high and so this problem can increase expense and can also increase risks.

The convention of first conducting seismic surveys and then geophysical analysis prior to exploratory drilling is widely accepted across the industry and indeed across the globe. In fact there is a long held view in the art that accurate real time seismic location is not possible, especially for relatively small objects such as boreholes. However, the inventors have established that real time seismic location and seismic visualisation of the drill bit and/or well-bore as it progresses through the subterranean zone is in fact possible.

As set out above, according to the invention seismic waves are transmitted into the subterranean region being explored. There are two important factors with the way this is introduced. First, the seismic wave originates from a position removed i.e. remote from the end of the well-bore being drilled. Second, according to at least preferred embodiments, the remote seismic wave is transmitted during (i.e. simultaneously with) the operation of the drill itself. Thus, seismic waves may be transmitted and a seismic response may be received at the same time as drilling is ongoing. Both of these steps are unconventional.

By transmitting a seismic wave into the region of interest in the above mentioned way and then simultaneously measuring the reflections it is possible to not only locate the drill bit but also to identify the path of the well-bore through the region. This is achieved by comparing the detected seismic response data with predetermined seismic data from the original seismic survey.

In effect comparing the two in real-time allows for changes in the subterranean region to be identified indicating where the drill bit is and the path along which it has travelled.

There are numerous reasons why this novel technique has not been used before. Most notably is the fact that the diameter of a well-bore is very small in relation to the area through which the well-bore will pass; the depth to which it is likely to extend; and the wave length of the seismic waves. Therefore, it has never previously been thought possible that a well-bore could be identified in this way and a real-time seismic well monitoring system realised.

The result according to first aspect is a real time seismic well-bore monitoring system allowing an operator to see precisely where the drill bit is and the path along which it has travelled on a seismic data display monitor or equivalent. This has numerous advantageous applications which are discussed in more detail below.

The seismic waves may importantly be emitted and the seismic response detected at a distance from the distal end of the well-bore. The detector or detectors may be located on the earth surface, on the seabed, on the surface of the sea, in the sea or on or in a sub-sea vehicle adapted to convey the detectors (and indeed transmitters).

That is, a surface seismic survey and data may be utilised, in which both the transmitter and detector(s) are located remote from the drilling apparatus and/or borehole. In contrast, in borehole seismic surveys, either the transmitter or detector is located remote from the drilling apparatus and/or borehole, and the other of the transmitter or detector is located within the borehole.

For example, in Arctic regions a sub-sea vehicle could conveniently locate a transmitter and or receivers under an ice cap. Locating the transmitter and/or receivers on the sea-bed improves the quality of the signal received by removing the water phase through which the signals would normally travel.

The detectors and transmitters are themselves well known in the art. Typical emitters include the Bolt Air Gun system manufacture by Bolt Technology Corporation. Typical detectors include detectors manufactured by Geospace Technologies.

The detectors and transmitter do not need to be located immediately vertically above the drill bit but simply generally above the drill bit and well-bore which extends into the subterranean strata. The transmitter and detectors could of course in principle be located within the strata too but this could unnecessarily increase exploration costs owing to the additional drilling required.

A single transmitter may be used and a plurality of detectors located at known separations from the transmitter. The detectors may be in the form of a two or three dimension detector array. A three dimensional detector array may advantageously be more accurate. A two dimensional array or three dimensional array may conveniently be towed by a survey ship or sub-sea vessel and can thereby track or follow the path of the well-bore and communicate data to the drill operator.

The detectors could in one arrangement be fixed to or connected to a survey ship's or submarine's hull at predetermined locations. In a sub-sea vehicular application the vehicle could track the movement of the bore-hole further optimising accuracy. An autonomous vehicle could be employed to either carry the receivers/emitters or to place them in position.

In general the seismic waves may be transmitted and the seismic response received from the surface (seabed or land) down into the strata. That is, both the transmitter and detector are located remote from the borehole and/or drilling apparatus. One way of describing the invention is Surface Seismic While Drilling (SSWD).

However, in an alternative slightly modified arrangement the seismic waves may be transmitted into the well-bore itself. Thus, the seismic waves may travel along the length of the well-bore and radiate out into the strata. In effect the well-bore acts as an elongate seismic transmission antenna.

The detected signals are compared against the corresponding signal that was measured (or predicted/modelled) for the same location as part of the seismic survey collected prior to the exploratory well being drilled i.e. the subterranean region would have been interrupted by the drill bit and well-bore. Repeated measurements are performed as the drill bit penetrates through the earth and the actual measurement will also be compared to the previous measurement, not only the measurement performed before the drilling started. As the bit and bore extend through the strata they generate changes in the subsurface which generates changes in the seismic reflections which are returning to the receivers (detectors).

A real-time comparison and data processing allows the drill operator to see the strata changing as the drilling takes place and in this way the operator can follow the drill bit in the subsurface.

As mentioned above conventionally it is not possible to detect the changes caused by the well-bore and drill bit within the strata. The method may create a seismic data set by detecting a seismic response in the form of one or more of the following:

(i) seeking/detecting prismatic waves caused by the seismic waves reflecting from geological boundaries within said region and the outer surface of the well-bore formed during the drilling operation;
(ii) seeking/detecting diffracted waves generated, for example by reflections, from the point or points at which the well-bore intersects (passes through) geological boundaries;
(iii) reflections from the bottom of the bore hole;
(iv) seismic energy transmitted into the borehole at the surface and transported into the subsurface along the borehole and radiating back to remote receivers (e.g. at the earth surface) through the subsurface strata carrying information about the position of the drill bit, and the borehole; and/or
(v) wave signals associated with reflections, and/or refractions caused by a difference in acoustic impedance of the well-bore and the acoustic impedance of the subterranean strata surrounding the wellbore.

The seismic data set may be created during drilling.

Diffracted waves may also be generated from the bottom of the borehole, and such waves may also be detected.

Diffracted waves may generally be generated at points of irregularity (for example, from the point or points at which the well-bore intersects geological boundaries, or from the bottom of the bore hole).

The seismic energy may also carry information regarding the bottom hole assembly, drill string, drilling fluid, cement, casing, contrast fluids (also gas).

Wave signals associated with reflections, refractions and/or surface waves may also be caused by a difference in acoustic impedance of the bottom hole assembly, drill string, drilling fluid, cement, casing, contrast fluids (also gas) and the acoustic impedance of the subterranean strata surrounding the wellbore.

The method may advantageously create a seismic data set during drilling by one or all of the following:

(i) seeking/detecting prismatic waves caused by the seismic waves reflecting from geological boundaries within said region and the outer surface of the well-bore formed during the drilling operation;
(ii) seeking/detecting diffracted waves generated by reflections from the point or points at which the well-bore intersects (passes through) geological boundaries.
(iii) reflections from the bottom of the bore hole;
(iv) seismic energy transmitted into the borehole at the surface and transported into the subsurface along the borehole and radiating back to remote receivers (e.g. at the earth surface) through the subsurface strata carrying information about the position of the drill bit and the borehole.

The inventors have made the non-obvious realisation that these types of signals, previously considered as 'noise' and removed from the data sets of the prior art in many instances, provide a way to detect the effects on the seismic response that are generated by relatively small objects such as a drilling apparatus or a borehole. These effects are thought to be particularly enhanced with the use of a sensor that is remote from the borehole/drilling apparatus as proposed herein. In fact the use of this technique allows not only the drilling apparatus or borehole to be detected, but also allows for other small objects to be detected in the seismic response. Thus, in a preferred embodiment the method includes detecting other small objects such as boulders and the like.

The created seismic data set may then be subtracted from a reference data set which may be seismic data generated before drilling commenced. Alternatively the reference data may be a preceding created seismic data set created during drilling. Thus, an incremental comparison is made over the drilling time. In effect a 4D drilling model is provided with time being the fourth dimension. The created seismic data set then displays the difference between previous data sets. Subtle changes can then be detected.

In an alternative seismic model data could be used instead of the measured reference data i.e. data that has been created by forward modelling a geological model of the subsurface terrain. These may be amplified to more clearly determine the position of the drilling apparatus.

Still further the signals in the returned seismic data may further be processed to more accurately locate the bit and well-bore. For example, for a given well-bore and a given known strata through which the well-bore passed it is possible to establish wave signals associated with reflections and/or refractions caused by a difference in acoustic impedance of the well-bore and the acoustic impedance of the subterranean strata surrounding the wellbore.

By detecting these signals and then optionally amplifying them the accuracy of the location of the bit and well-bore may be further enhanced.

The detection may of course be continuous or may be conducted at discreet time intervals. The detection could be automatic or in response to a location update request from the drill operator.

Advantageously the transmission, detection and comparison are carried out continuously during the drilling operation giving real-time location data. This may for example be by means of a data processor and a display proximate the drill operator.

The data may be combined with additional data received from conventional Logging While Drilling (LWD) or Measurement While Drilling (MWD) techniques to provide the drill operator with a suite of information including, as provided by the present invention, the precise measured location of the drill bit and the path of the well-bore (i.e. not predicted as is conventional).

Thus, viewed from another aspect there is provided a subterranean drill monitoring apparatus comprising at least one seismic transmitter arranged to transmit seismic waves into a subterranean region from a position remote from a subterranean drill; a plurality of seismic detectors arranged to detect a reflected and/or diffracted response from said seismic transmitter; processing apparatus arranged to carry out a drill locating method; and a display means arranged to output a visualisation of the location of the subterranean drill.

Viewed from another aspect there is provided a method of real-time monitoring of a subterranean drilling operation, comprising the steps of (A) during a drilling operation, transmitting seismic waves from a position remote from a distal end of a well-bore; (B) simultaneously detecting a response from said transmitted seismic waves; and (C) subtracting the detected response from predetermined seismic survey data of the drilled region so as to plot a path of the drilling operation through the drilled region.

The term 'predetermined' is intended to refer to both a detected response subtracted from the original seismic data (before drilling) or from the previous seismic survey data generated while drilling is in progress.

The applications of the invention are numerous but are particularly useful where precise and efficient drilling is required. The blown out well in the Gulf of Mexico is one example where delays in the relief well reaching the production well resulted in further environmental damage that could have been minimised by intersecting the relief well and the production well as quickly as possible.

Thus, viewed from a still further aspect there is provided a relief well drilling method comprising the steps of: (A) transmitting seismic waves into the subterranean region during a subterranean drilling operation from a location remote from said drilling apparatus; (B) detecting a response from said transmitted seismic waves; (C) comparing said detected response with predetermined seismic survey data of said subterranean region to determine the location of a drill bit within said region; and (D) directing a drill bit in response to said comparison so as to intersect well-bore proximate a casing shoe.

The predetermined survey data referred to herein may be the result of a full survey of the region by, for example, a dedicated survey ship adapted to conduct seismic sub-sea surveys for example. Alternatively, mathematical models may be used based on seismic data in combination with algorithms based on known rock types in the region.

The accuracy of drilling control which the present invention provides to the drill operator has still further applications, including:

avoiding unnecessary drill retractions
accurate locating of water injections wells to increase production
accurate locating of polymer wells (used for sealing wells or parts thereof)
navigating around salt formations or other geo-hazards

Viewed from yet another aspect there is provided a subterranean drill monitoring method wherein seismic waves are introduced into a subterranean region from a position elevated with respect to a drilling apparatus simultaneously during a drilling operation; and wherein diffraction and prismatic wave reflections of the seismic waves caused by interactions of the waves with a drilling apparatus, a geological boundary and/or a well-bore are detected and compared with predetermined seismic data to locate the drilling apparatus within the subterranean region.

Viewed from another aspect there is provided a method of monitoring a drilling operation in subterranean strata comprising the steps of detecting from a land or seabed surface diffracted and/or prismatic waves in seismic reflections simultaneously as a subterranean drilling operation is performed.

Finally, viewed from a still further aspect there is provided a subterranean drilling control apparatus comprising a data processor and visual display means wherein the processor is arranged to perform the method according to any preceding method claim and to display on said display apparatus the path and instantaneous position of a drilling apparatus through and in the subterranean region.

Optionally it is also possible to introduce a contrast gas or fluid into the wellbore or into the formation to improve the signals and resulting visualisation. The purpose of the gas is to change the acoustic properties of the borehole and specifically to increase reflectivity. Any suitable gas may be used, nitrogen being one example which is advantageously inert. This could be a small percentage such as 2-3% of the well volume. Still further data may be collected before and after the gas is introduced such that the difference in acoustic properties of the borehole is highlighted in the collected data.

Certain preferred embodiments of the invention will now be described by way of example only and with reference to the accompanying drawings in which:

Figure 1 shows a typical environment in which the invention may be utilised;
Figure 2 shows a conventional survey image;
Figure 3 shows a prismatic wave reflection from a well;
Figure 4 shows a diffraction wave reflection from a well;
Figure 5 shows a well acting as a seismic transmitter;
Figure 6 shows a drilling operation according to a preferred embodiment of the invention;
Figures 7A and 7B are flow diagrams of the method of preferred embodiments of the invention;
Figure 8 is a schematic of the components of SSWD apparatus;
Figure 9 shows an example of an image output from a preferred embodiment of the invention;
Figure 10 shows a relief well drilling application;
Figure 11 shows a geo-hazard drilling application; and
Figures 12A and 12B illustrate the seismic wave reflections from a layer interface and a borehole (respectively).

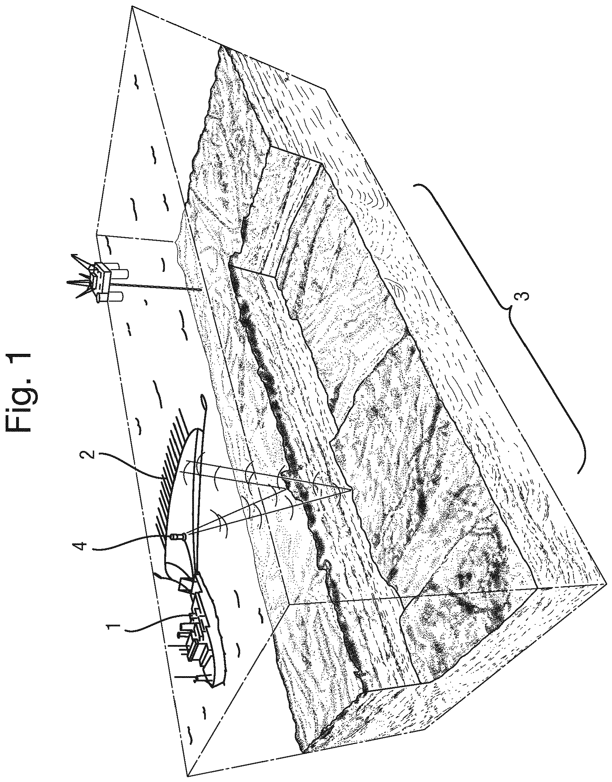

Figure 1 illustrates the way conventional surveying is conducted to locate hydrocarbons offshore. Here a survey vessel 1 tows an array of hydrophones 2 over a subterranean region 3 where it is believed a reservoir of oil or gas has accumulated.

The vessel 1 also tows an emitter 4 emitting an acoustic wave down, through the water, and into the region 3. The acoustic wave travels through and interacts with the strata. Reflections returned from the strata are received by the array 2 which are stored for subsequent processing and analysis. The location of the receivers and transmitters are logged using GPS so that the precise location of any detected reservoirs can be recorded. This is what is described herein as predetermined seismic survey data. It will be recognised that other types of seismic survey could equally be used. The data then processed to map the region.

This image is created from the original survey data using techniques which are well known in the art such as reverse time migration RTM and will not be described in detail herein. However, to summarise the process the raw data received from the survey vessel and recorded by geophones/hydrophones (making up the array) is extrapolated backwards in time and depth and focused onto the positions they were reflected at. This is the action of reverse time migration i.e. to perform focusing much like a lens focuses a photographic image onto a screen. The reflected and diffracted waves from the borehole are thus repositioned ("migrated") back to where they originated from. This is one of many methods that can be used to analyse the raw data received by the array.

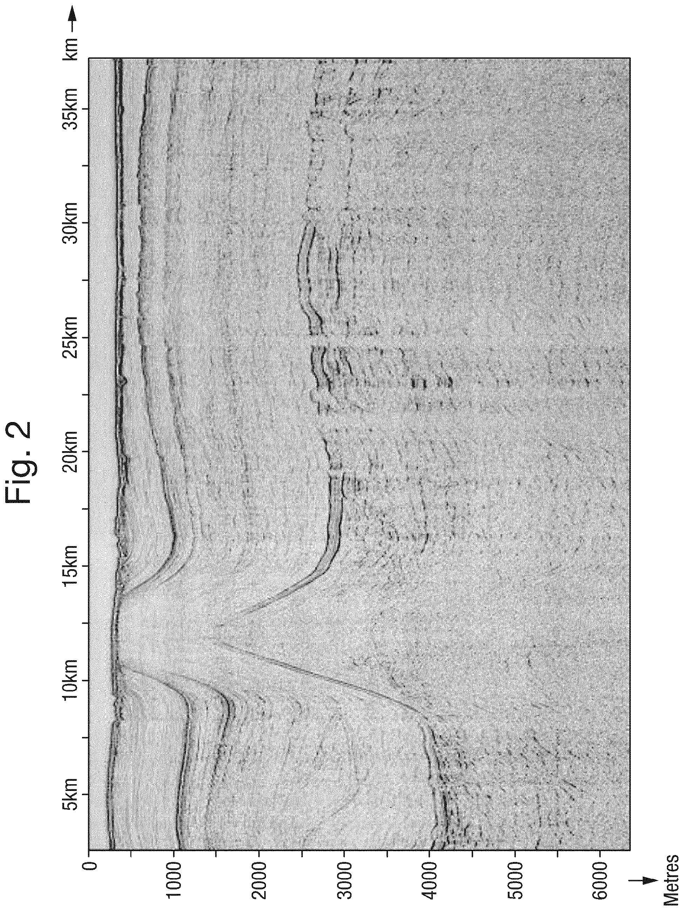

Figure 2 illustrates the outcome of the RTM analysis method with depth in the y axis and lateral distance in the x axis. As shown the image extends over 6000metres in depth and tens of kilometres in the horizontal direction. Geological features in the subterranean rock can be clearly seen. Geophysicists can interpret these images to identify locations where accumulations of hydrocarbons may have occurred. They can also identify regions which are unsuitable (or sub-optimal) for drilling. This allows the geophysicists to identify both the target position (the target formation) and also the optimal drilling route to reach the target (avoiding geo-hazards for example). The scale of the image in Figure 2 is very large because of size of area that is surveyed by the survey vessel.

Once the formation of interest has been identified and the drilling path set an exploration drilling vessel is dispatched to the area and exploratory drilling commenced. This is an extremely expensive operation and success rates for finding hydrocarbons are relatively low (typically in the region of 25%) in spite of the extensive geological survey and analysis which is conducted.

As discussed above the drilling operation is performed using the predetermined geological survey data and drilling route. The location of the drill is estimated in existing systems using various measurements including the length of the drill string, orientation of the bit, logged data about the conditions at the drill bit.

However, with presently available technology the drill operator is not able to see directly the actual position of the drill bit and string in relation to the seismic section shown in Figure 2. This is what the present invention now provides. When exploring for hydrocarbons everything builds on the seismic data and it will be a great advantage to also be able to see the drill bit and the borehole directly on the seismic section shown in Figure 2 as it penetrates through the subsurface. In this way a direct way to steer the drilling will be available. In Figure 2 a strong reflector may be present half way to the bottom of the section. With the technique according to the present invention the drill operator will be able to see the drill bit directly on the seismic section as it approaches this reflection. The position of the drill bit on the seismic section must be calculated using the acoustic velocity of the rocks and the distance in meters as measured on the drilling rig. This is an uncertain method particularly when drilling in new areas.

The drill operator may be provided with a view as shown in Figure 2 with the position and path of the drill string over-laid onto the image. In another arrangement a 3D model of the subsurface may be provided allowing the drill operator to move through the model and rotate the image to accurately visualise the location and path of the drill bit. Given the time based component of the invention one way to define the invention is a four dimensional seismic visualisation tool; the three conventional coordinate dimensions x, y and z and also a time t component (a fourth dimension). The progress and position of the drill string can be visualised and monitored over time.

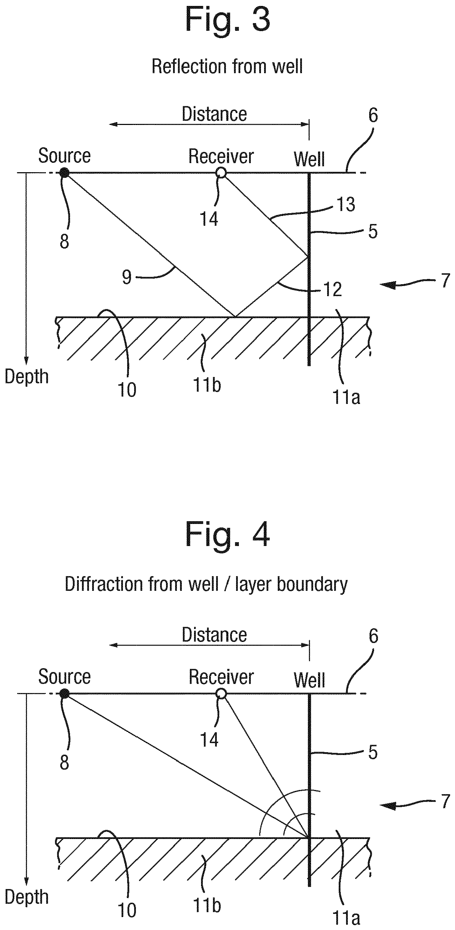

Figures 3 and 4 illustrate the two wave-modes that are used according to the present invention to locate the bore-hole within the raw seismic data. It should first be made clear that according to conventional data analysis a pre-processing step is carried out to remove 'noise' and enhance the quality of the raw data received from the survey. This preprocessing step is not carried out according to the present invention. Instead all of the data is retained - in fact it is this noise data that allows, in part, the location and the bore-hole to be determined in real-time.

A numerical finite-difference solution of the wave equation is used to compute the forward wave field propagating from the source position to the borehole. The recorded data at the receiver is extrapolated backward in time and downward in depth using a finite-difference solution of the wave equation. The forward and backward wave fields are then crosscorrelated at zero time-lag to produce an image of the borehole.

Figure 3 illustrates how waves are reflected from the bore-hole. A bore-hole 5 extends from the surface 6 into the subterranean surface 7. A seismic source 8 emits a seismic wave 9 into the surface 7. This wave travels through the rock and interacts with a boundary 10 between two different strata 11 a and 11 b. Part of the wave 12 is reflected by this boundary and changes direction. This reflected wave 12 then interacts with the bore-hole 5 which is an elongate cylinder extending into the rock. Part of the reflected wave 12 is then further reflected 13 by the bore-hole 5 and returns to the surface. Here the reflected wave 13 is detected by a geophone 14 or other suitable detector. This type of wave will is called a 'prismatic wave' owing to its shape. This process can be repeated at different positions (using multiple geophones) and the data collected. This data comprises the well-reflection data.

Figure 4 illustrates the second type of bore-hole data. This is called well-diffracted data.

In Figure 4 the well 5 extends from the surface 6 into the rock 7. Again, the bore-hole 5 penetrates a boundary 10 between two different rock types or formations 11 a and 11 b. A seismic wave is emitted by the source 8 and is reflected/diffracted by the position where the bore-hole penetrates the boundary between the two rock types 11 a and 11 b. A signal is reflected and diffracted and subsequently detected by receiver 14 on the surface.

To record both of these wave-forms and to create the raw data from which the bore-hole can be extracted a plurality of receivers will be located on the surface and used to record the reflected and diffracted wave data.

The emitter may be a standard seismic emitter such as a bolt air gun. Similarly the receivers may be geophones or hydrophones manufacturer by Geospace Technologies.

The receivers are arranged in an array, each being spaced apart by a predetermined distance.

The data can be generated using a single source and a plurality of receivers. The source is advantageously moved to different positions to build a high resolution data-set of reflected and diffracted waves in 3 dimensions. The total volume of data will then consist of a large number of records where each record contains data measured at all receivers for a single source position. The source is relocated, its position recorded, and data re-gathered.

Both the prismatic and diffracted waves will be relatively weak in reflection strength compared to other reflected waves also present in the recorded data. The strength of the reflections at the bore-hole depends on the following parameters:

- the difference in elastic parameters between the inside of the bore-hole and the surrounding rocks;
- the frequency of the emitted wave; and
- the radius of the bore-hole.

The prismatic and diffracted wave forms are the key to locating the bore-hole and it is these signals that are enhanced within the data. As discussed above in conventional data analysis and specifically seismic imaging methods the prismatic waves and diffracted waves are deleted and do not form part of the resulting image. They are deleted because they represent noise and reduce the normal resolution of formations.

To locate the bore-hole these prismatic and diffracted waves are first amplified. Then, reverse-time migration is used to generate the image and location of the bore-hole within the surveyed region.

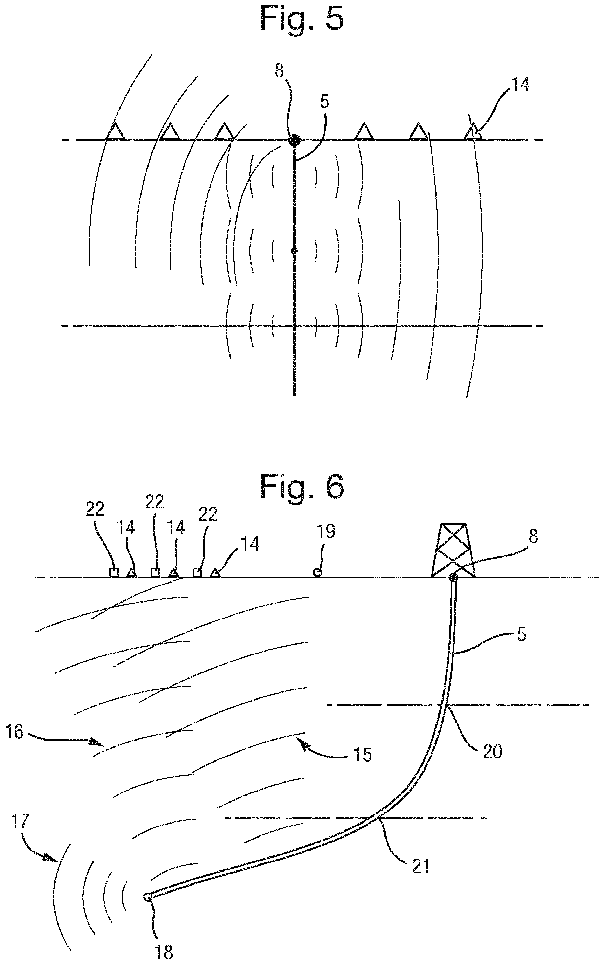

Figure 5 illustrates a different arrangement of seismic emitter and receiver. In Figure 5 the emitter 8 is located immediately adjacent to the top of the bore-hole 5. Seismic waves are introduced directly into the bore-hole and are emitted radially outwards and the bore-hole functions and a subterranean seismic transmitter. Signals can be detected by an array of detectors 14 located on the surface. Advantageously such an arrangement means that only the receivers need be located remotely from the well-bore. Furthermore, advantageously the seismic waves do not interfere with the drilling operation or movement of fluids or the like inside the drill-string.

Figure 6 illustrates a longer drilling path. In Figure 6 the bore-hole extends vertically and then at an angle to the vertical towards a formation (not shown). The emitter 8 is located at the top of the bore-hole and introduces a seismic wave along the drill string. A seismic wave is then emitted by the bore-hole as illustrated by the three wave propagation paths 15,16,17. These signals can then be detected by the receivers 14 formed in an array on the surface (or seabed as the case may be). Advantageously the receiver array can be moved during the drilling operation to follow the distal end of the drill-string 18. This can further enhance the resolution of the resulting image (described further below).

The resolution may still further be enhanced by combining the prismatic, diffraction and subterranean emission. In such an arrangement further emitters 19 may be used to collect the prismatic and diffraction waves as discussed above. Different boundaries 20, 21 along the drill path may be detected in the same way as described above with reference to Figure 4. Thus a complex transmitter/receiver pattern may be formed and adjusted to improve the subsurface picture depending on the acoustic properties of the subsurface at the actual location.

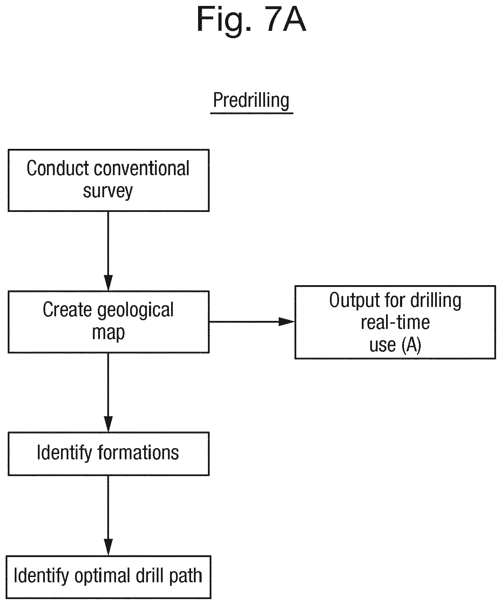

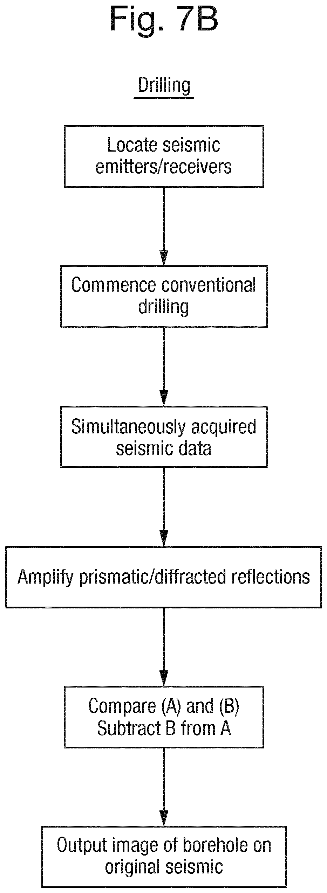

The receivers 14 may be arranged to simultaneously collect reflection wave data from both the primary emitter 8 (via the drill string) and the secondary surface emitter 19. Alternatively there may be two emitter/receiver pairs i.e. primary emitter is paired with receivers 14 and secondary emitter 19 is paired with a second array of receiver 22. The two may operate a different frequencies thereby allowing for high resolution data (and images) to be generated. The steps of the drilling process according to the present invention will now be described with reference to figures 7A and 7B.

The invention is realised in two stages:

- a first stage of pre-drilling seismic survey and analytics
- a second real-time drilling seismic survey and analytics stage

With reference to Figure 7A, in the pre-drilling stage conventional surveying is performed to create a geological map of formations of interest. Additionally an optimal drill path is defined. These two steps are conventional in the art.

In the second stage as well as a conventional set up of drilling apparatus and associated safety systems the surface seismic while drilling (referred to hereinafter as SSWD) apparatus is also configured around the drilling apparatus. Specifically, hydro/geophones are located at predetermined positions and an associated seismic emitter is located either at the top end of the drill-string or remote from the drilling rig or ship.

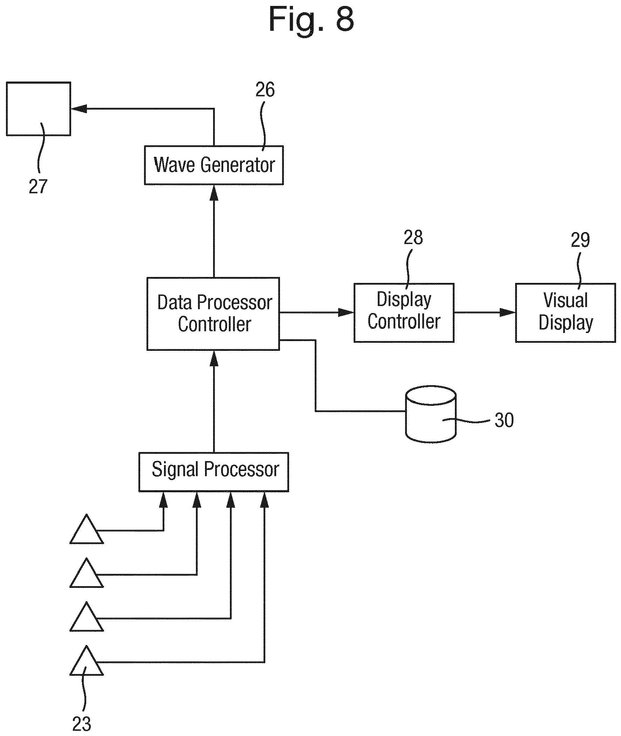

The SSWD equipment will be described with reference to Figure 8.

The SSWD equipment comprises a plurality of seismic receivers (geo or hydrophones) 23 in communication with a signal processor 24. Communication may be wired or advantageously radio or wireless. The signal processor is in communication with a data processor 25 and system controller which is in term arranged to control a seismic wave generator 26 which energises a seismic emitter 27. The data processor is also connected to a display controller 28 and to a suitable visual display unit 29. Finally the data processor is provided with a data storage medium 30 to contain the survey data for processing. The display unit is located proximate the drill operator during the drilling operation. The remainder of the system is passive in the sense that no control is required by the drill or rig operators, it is purely arranged to provide information to the drill operators. The refresh rate of the seismic data must be adequate to provide the operator with a reasonably up-to-date visualisation.

In use the signal processor receives the seismic wave data from the array. The prismatic and diffraction wave data is identified and amplified. The amplified data is output to a data processor and system controller. The data processor first analyses the prismatic and diffracted wave data to determine the location of the bore-hole with respect to the receivers/emitter so as to determine the path of the bore-hole in 3 dimensions (the location of the emitter and receivers are known).

The data processor then compares the bore-hole location data determined above against the original survey data created during the survey step and overlays the bore-hole path onto the original survey map. This can be achieved by subtracting one from the other.

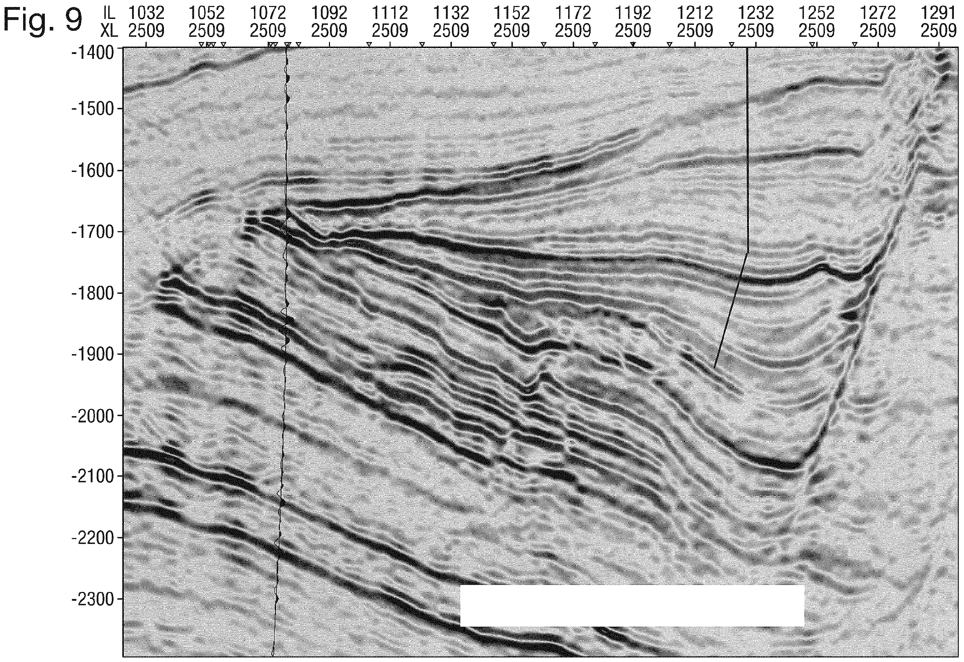

The resulting data is then output in a graphical form showing the path of the bore-hole against the subterranean section (as illustrated in Figure 2) or in a 3D seismic model or cube. An example of how this can be displayed to the drilling operators is illustrated in Figure 9.

Returning to Figure 7B the steps of operation are shown. First the emitters and receivers are located. Conventional drilling then commences, the only difference being that the drill operator is additionally provided with a SSWD display which is visible whilst drilling takes place.

Seismic surveying is then simultaneously performed during the drilling process. As described above with reference to Figure 8 the prismatic and diffraction waves identifying the location of the well-bore are identified using waveform analytical methods and amplified. The resulting data is compared against the original survey to generate an image of the path of the bore-hole.

Relief Well Drilling

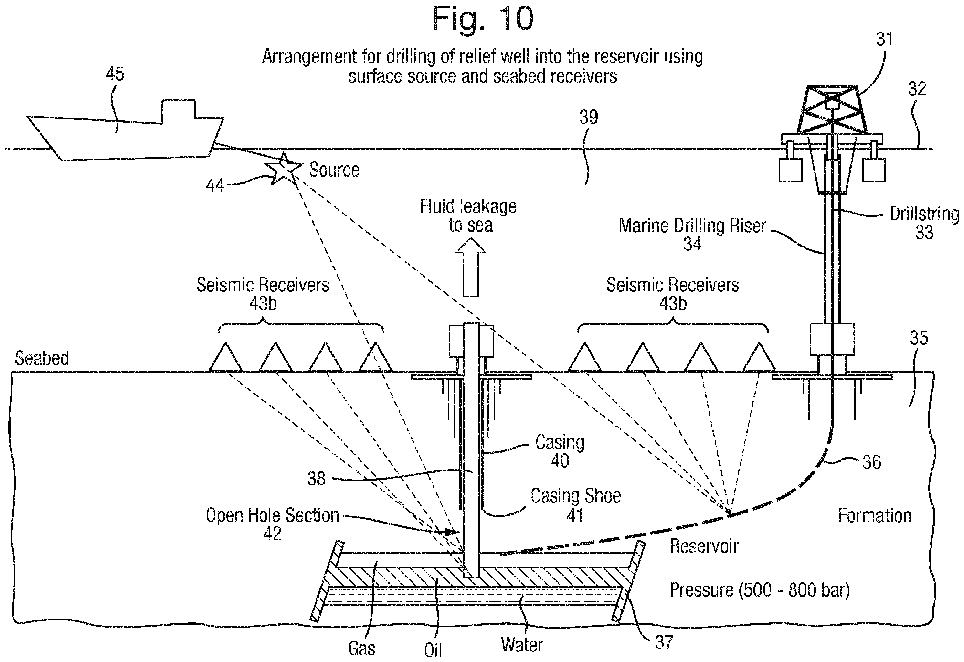

A first application for the drilling of a relief well will now be described with reference to Figure 10.

Figure 10 could illustrate a blown-out oil well, much the same as the Macondo oil field in the Gulf of Mexico. There an explosion on the rig caused a failure of the blow-out preventer which would have otherwise sealed the oil reservoir. Unfortunately it failed and approximately 4.9 million gallons of oil poured into the Gulf.

To seal or kill the well it was necessary to drill a relief well to intersect the main bore-hole close to the reservoir and inject high density drilling mud to cease the flow. It will be recognised with the benefit of the teaching of the present invention that an improved drilling technique is provided by the invention described herein which could have dramatically reduced the time to kill the leaking well.

Referring to Figure 10 there is shown a floating drilling rig 31 on the sea-surface 32. The rig 31 comprises a drill string 33 passing through a marine drilling riser 34 and into the seabed 35. The intended path of the drill string is shown by path line 36 with the target being the reservoir 27. The internal pressure of the reservoir (typically 500-800 bar) drives oil up through the exploration or production well 38 to the sea 39.

The exploration or production well 39 comprises an outer casing 40, casing shoe 41 and open hole section 42 penetrating the reservoir. The configuration of an exploration or production well is well understood in the art.

Those skilled in the art of relief well drilling will understand that speed and accuracy of drilling are paramount in killing the well and minimising oil leakage.

According to the relief well drilling method and apparatus of the present invention the seismic receiver array 43a, 43b are positioned on the seabed 32. This optimises accuracy. Equally they could be mounted onto a manned or autonomous sub-sea vehicle. This may for example be particularly advantageous when drilling under sea ice.

The emitter 44 in the example shown is towed behind a support vessel 45 on the sea surface whose position is known from GPS signals. It should though be recognised that that the receivers and emitter(s) could be located anywhere with respect to the drilling apparatus.

The reference to anywhere will of course be recognised to mean within operational range of the drilling apparatus.

It should further be recognised that the invention described herein is not restricted in its use to a particular environment i.e. the invention may be used for land or sub-sea exploration and also under ice cover either at sea or on land.

The system is operated in the same way as described above. That is, the emitter and receiver arrays are operated simultaneously with the drilling operation and the drill operator is provided with a real-time visual image of the drill string compared to the position of the production well.

The intersection point of the relief well and the production well are of paramount importance. The relief well must avoid the metallic casing and penetrate the open hole section as close to the reservoir as possible. Thus, as shown in Figure 10 the method according to the present invention uses two pairs of receiver arrays to maximise the accuracy of control of the relief well drilling process. The first array 43a is arranged to locate the position of the lower section of the relief well and the reservoir. The second array 43b is arranged to monitor the progress of the drill string. A single emitter can be used as shown in Figure 10.

Thus, according to the invention the drill operator can observe the movement of the drill string with respect to the blown-out well and reservoir in real time. This prevents unnecessary retraction and sealing of failed relief wells and maximises speed. The speed and reliability of the system described herein also makes the need for a second back-up relief well redundant. This reduces costs substantially.

The rapid response times and the additional and direct measurements according to the present invention provide greater certainty that a well blow out can be quickly sealed. This allows operators to meet strict safely requirements when drilling in more challenging environments such as the Arctic regions. In these conditions the conventional means to detect a blown-out well (magnetic measurements for control of directional drilling) are far less accurate.

In addition magnetic measurement techniques require steel in the well bore to function. If a blow-out originates below the last steel casing in the well, magnetic steering cannot be used. Here SSWD can be of great importance since it can locate the borehole directly by use of acoustic waves. It can be up to 1000 metres between the bottom of the well and the last steel casing. It is much more effective to kill the well from the bottom than from a position further up in the borehole. Conventional magnetic technique do not allow for the control needed to steer the borehole to the bottom of the well because of the reliance on the magnetic properties of steel.

Geo-hazard Drilling

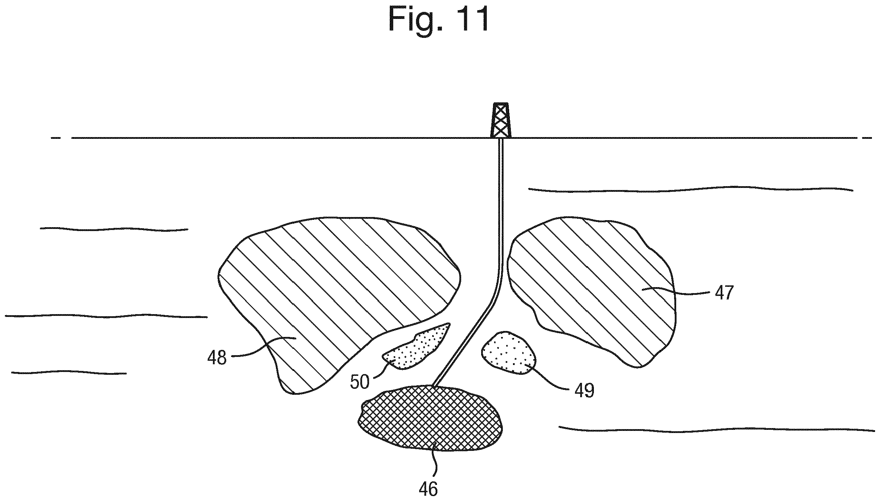

A second application will now be described with reference to Figure 11.

Figure 11 illustrates a subterranean region comprising an accumulation of oil located beneath two large salt formations 47, 48 and close to a pair of gas deposits 49,50.

The salt formations and gas pockets represent 'geo-hazards' which it is generally preferable to avoid. For example, if the drill bit penetrates a salt formation the drilling become more difficult and higher forces are applied to the drill bit accelerating wear and slowing down drilling. Similarly, if the drill bit penetrates a pressurised gas pocket this can cause gas blow outs or pressure surges in the drill string. Drilling in areas containing geo-hazards is therefore very problematic and some governments enforce strict safety rules.

For example, when it is desired to reach an accumulation of oil or gas proximate geo-hazards national laws often make it mandatory for the drilling apparatus to have pressure control systems (so that if a pressurised pocket is penetrated by a drill the pressure can be controlled from the surface. It will be recognised with the benefit of the teaching of the present invention that the method and apparatus of SSWD not only allows the drill operator to navigate around salt deposits but also to navigate around dangerous shallow gas and reservoirs. This means that otherwise difficult deposits can be accessed and it also means that pressure controlled drilling rigs are not always needed.

The method and apparatus still further allows for an automated drilling/relief well drilling system where the drill operator oversees the drilling operation but the actual control of the drill can be computer controlled using the data determined from the method.

Still further the method and apparatus allows wells to be drilled in a more accurate and secure way in densely drilled oil fields where it is challenging to introduce a new well. New wells might for example be used to inject water or gas to enhance an old well's production. It can also be used for introducing liquefied carbon dioxide for carbon capture.

As regards a computer program product it will be recognised that the computer instructions can be carried on any suitable carrier medium such as a disc or memory card or other non-transient medium. Instructions may also be in the form of a signal such that the control of a drilling apparatus according to the invention could be performed remotely from the drill rig thereby reducing the number of operatives on the rig or drilling vessel.

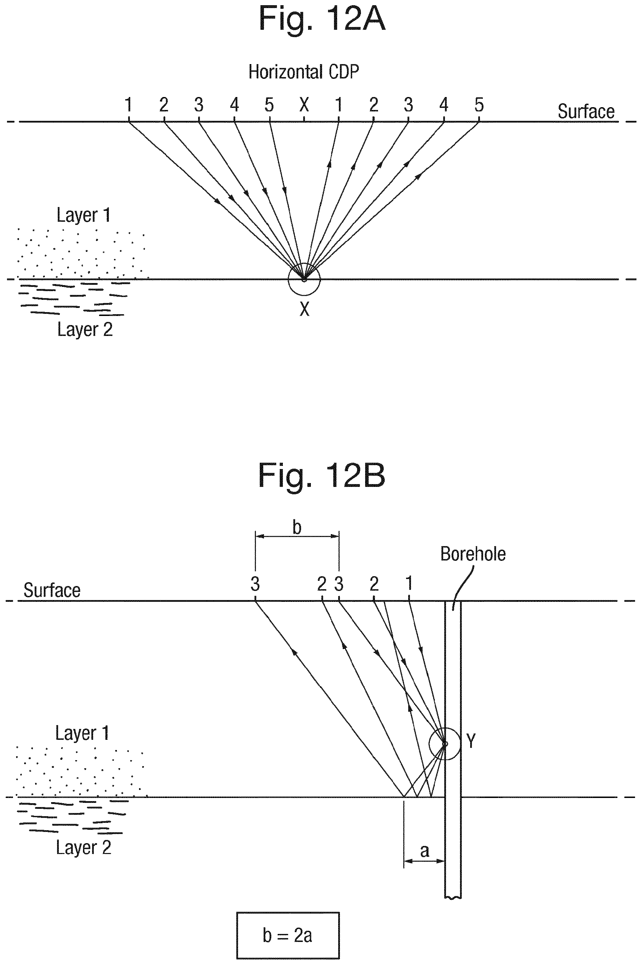

Figures 12A and 12B provide further details of the seismic wave reflections and illustrate the seismic wave reflections from a layer interface (Figure 12A) and a borehole (Figure 12B).

Figure 12A illustrates how the reference data in seismic surveys is used. To provide an accurate reference seismic data set it is desirable to maximize the real signal and to reduce the noise. This is done by collecting as many reflections from the same point in the subsurface as possible. These points are called CDP; common depth points. (Figure 12A Horizontal CDP, point X). In the processing the reflection from CDPs are added together. In this process the signal to noise ratio is dramatically increased. The CDPs can be used to identify more or less horizontal geological surfaces. This is used to generate the reference data set.

Referring to Figure 12B, seismic measurement whilst drilling the bore hole requires a different approach. Here the target object is the borehole which may be vertical, inclined or a combination of both as the borehole progresses.

To establish CDPs along a vertical surface is new and different to the method used to create the reference seismic data and utilises a different acquisition pattern on the surface since the seismic energy is reflected from the vertical borehole in addition from a horizontal surface.

The pattern will vary depending on the geology and the inclination of the borehole. This pattern may be described as a "dense geometric acquisition pattern and procedure for optimization of CDPs along a vertical surface". Figure 12B shows the relationship between the incoming and outgoing waves. Correct calculation of the optimal acquisition pattern is dependent on information about the subsurface. This information can be obtained from the existing seismic reference data and also the ongoing drilling that generates new seismic data as the drilling progresses. The acoustic properties, the densities and the subsurface geological surface are the parameters are used for a particular geographic region to optimize the seismic data acquisition.

As also shown in Figure 12B the relationship between the horizontal separation (on the surface) between an emitted wave and a received wave (distance b) is related to the horizontal separation of the bore hole and the point at which the seismic wave reflects from the interface between layer 1 and layer 2 (distance a) by the following relationship:

$$b = 2a$$

Certain preferred embodiments are defined in the following numbered clauses:

1. A method of locating drilling apparatus and/or borehole in a subterranean region, comprising the steps of:

    (A) transmitting seismic waves into the subterranean region during a subterranean drilling operation from a location remote from said drilling apparatus;
    (B) detecting a seismic response from said drilling apparatus; and
    (C) comparing said detected response with predetermined seismic survey data of said subterranean region to determine the location of said apparatus.

2. A method as defined in clause 1, wherein the seismic waves are detected at the surface of the subterranean region.

3. A method as defined in clause 1 or 2, wherein the seismic waves are detected on or proximate to the seabed.

4. A method as defined in clause 1 or 2, wherein the seismic waves are detected on the sea surface generally above the subterranean region or within the sea generally above the subterranean region.

5. A method as defined in any preceding clause, wherein the seismic waves are detected by a plurality of spaced apart detectors.

6. A method as defined in clause 5 wherein the spaced apart detectors are in the form of a two or three dimension detector array.

7. A method as defined in any preceding clause wherein the seismic waves are transmitted from the surface of the subterranean region.

8. A method as defined in any preceding clause wherein the seismic waves are transmitted into a well-bore extending from the surface of the subterranean region to a distal location of said drilling apparatus.

9. A method as defined in any preceding clause, wherein the step of comparing said detected response comprises the additional steps of:

creating a seismic data-set by seeking prismatic waves generated by reflections from geological boundaries within said region and a well-bore formed during the drilling operation and/or seeking diffracted waves generated by reflections from a point of intersection of the well-bore and a geological boundary; and

subtracting said seismic data set from a reference seismic data set wherein the reference seismic data-set is one of a data set determined before drilling or a previous seismic data set created during drilling.

10. A method as defined in any preceding clause wherein the step of comparing said detected response comprises the additional steps of:

seeking wave signals associated with reflections and/or refractions caused by a difference in acoustic impedance of the well-bore and the acoustic impedance of the subterranean strata surrounding the well-bore; and

optionally amplifying said signals to determine the position of the drilling apparatus.

11. A method as defined in any preceding clause wherein the step of detecting a response from said transmitted seismic waves is performed continuously in real-time during the drilling process or at predetermined time intervals during the drilling process.

12. A method as defined in any of clauses 1 to 10, wherein the steps (A), (B) and (C) are performed simultaneously.

13. A method as defined in any preceding clause wherein the location of the drilling apparatus is determined by subtracting the detected response from the transmitted seismic waves from the predetermined seismic survey data.

14. A method as defined in any preceding clause wherein a data processor is configured to receive the predetermined survey data and to compare said data with detected response data from said transmitted seismic waves.

15. A subterranean drill monitoring apparatus comprising:

at least one seismic transmitter arranged to transmit seismic waves into a subterranean region from a position remote from a subterranean drill;

a plurality of seismic detectors arranged to detect a reflected and/or diffracted response from said seismic transmitter;

a processing apparatus arranged to carrying out the method according to any of clauses 1 to 14; and

a display means arranged to output a visualisation of the location of the subterranean drill.

16. A method of real-time monitoring of a subterranean drilling operation, comprising the steps of:

(A) during a drilling operation, transmitting seismic waves from a position remote from a distal end of a well-bore;

(B) simultaneously detecting a response from said transmitted seismic waves; and

(C) subtracting the detected response from predetermined seismic survey data of the drilled region so as to plot a path of the drilling operation through the drilled region.

17. A method as defined in clause 16, wherein the seismic waves are introduced into an open end of the well-bore such that the well-bore is a seismic transmitter.

18. A method of determining an intersection of a first and second well-bore in a subterranean region

19. A relief well drilling method comprising the steps of:

(A) transmitting seismic waves into the subterranean region during a subterranean drilling operation from a location remote from said drilling apparatus;

(B) detecting a response from said transmitted seismic waves; and

(C) comparing said detected response with predetermined seismic survey data of said subterranean region to determine the location of a drill bit within said region;

(D) directing a drill bit in response to said comparison so as to intersect well-bore proximate a casing shoe.

20. A method as defined in clause 19, wherein the predetermined seismic survey data is data generated by means of a mathematical model of the expected geological conditions within the subterranean region.

21. A subterranean drill monitoring method wherein seismic waves are introduced into a subterranean region from a position elevated with response to a drilling apparatus simultaneously during a drilling operation; and wherein diffractions and prismatic wave reflections of the seismic waves caused by interactions of the waves with a drilling apparatus, a geological boundary and/or a well-bore are detected and compared with predetermined seismic data to locate the drilling apparatus within the subterranean region.

22. A method of monitoring a drilling operation in subterranean strata comprising the steps of detecting from a land or seabed surface diffracted and/or prismatic waves in seismic reflections simultaneously as a subterranean drilling operation is performed.

23. Subterranean drilling control apparatus comprising a data processor and visual display means wherein the processor is arranged to perform the method according to any preceding method clause and to display on said display apparatus the path and instantaneous position of a drilling apparatus through and in the subterranean region.

24. A computer program product comprising computer implementable instructions for causing a programmable computer to carry out the method according to any preceding method clause.

25. A computer program product comprising computer implementable instructions for causing a programmable computer to become configured as the apparatus according to any preceding apparatus clause.

26. A method as defined in any preceding method clause wherein a contrast gas or fluid is introduced into the wellbore to increase the reflectivity of the wellbore.

27. A method of locating a drilling apparatus and/or a borehole in a subterranean region, comprising the steps of:

    (A) transmitting seismic waves into the subterranean region during a subterranean drilling operation, the seismic waves being transmitted from a location remote from said drilling apparatus;
    (B) detecting a seismic response from said drilling apparatus or borehole; and
    (C) comparing said detected response with predetermined seismic survey data of said subterranean region to determine the location of said apparatus or borehole.

28. A method as defined in clause 27, wherein the seismic waves are received at a location remote from said drilling apparatus or borehole, more preferably from a location generally above the drilling apparatus and/or borehole, and most preferably at a location on the surface of the subterranean region.

29. A method as defined in clause 27 or 28, wherein the seismic waves are transmitted from the surface of the subterranean region.

30. A method as defined in clause 27, 28 or 29, wherein the seismic waves are transmitted into a well-bore extending from the surface of the subterranean region to a distal location of said drilling apparatus.

31. A method as defined in any of clauses 27 to 30, wherein a seismic data set is created, preferably during drilling, by detecting a seismic response in the form of at least one of the following:

    (i) seeking/detecting prismatic waves caused by the seismic waves reflecting from geological boundaries within said region and the outer surface of the well-bore formed during the drilling operation;
    (ii) seeking/detecting diffracted waves generated, for example by reflections, from the point or points at which the well-bore intersects (passes through) geological boundaries.
    (iii) reflections from the bottom of the bore hole;
    (iv) seismic energy transmitted into the borehole at the surface and transported into the subsurface along the borehole and radiating back to remote receivers (e.g. at the earth surface) through the subsurface strata carrying information about the position of the drill bit and the borehole; and/or
    (v) wave signals associated with reflections and/or refractions caused by a difference in acoustic impedance of the well-bore and the acoustic impedance of the subterranean strata surrounding the wellbore.

32. A method as defined in any of clauses 27 to 31, wherein the step of comparing said detected seismic response comprises:

    creating a seismic data-set by seeking prismatic waves generated by reflections from geological boundaries within said region and a well-bore formed during the drilling operation and/or seeking diffracted waves generated by reflections from a point of intersection of the well-bore and a geological boundary; and
    subtracting said seismic data set from predetermined seismic survey data in the form of a reference seismic data set wherein the reference seismic data-set is one of a data set determined before drilling or a previous seismic data set created during drilling.

33. A method as defined in any of clauses 27 to 32, wherein the step of comparing said detected response comprises the additional steps of:

    seeking wave signals associated with reflections and/or refractions caused by a difference in acoustic impedance of the well-bore and the acoustic impedance of the subterranean strata surrounding the well-bore; and

optionally amplifying said signals to determine the position of the drilling apparatus.

34. A method as defined in any of clauses 27 to 33, wherein the step of detecting a seismic response from said transmitted seismic waves is performed continuously in real-time during the drilling process or at predetermined time intervals during the drilling process.

35. A method as defined in any of clauses 27 to 34, wherein the location of the drilling apparatus is determined by subtracting the detected seismic response from the transmitted seismic waves from the predetermined seismic survey data.

36. A method as defined in any of clauses 27 to 35, wherein a data processor is configured to receive the predetermined survey data and to compare said data with detected response data from said transmitted seismic waves.

37. A method as defined in any of clauses 27 to 36, being used for real-time monitoring of a subterranean drilling operation, wherein step (C) is used to plot a path of the drilling operation through a drilled region.

38. A method as defined in clause 37, wherein the seismic waves are introduced into an open end of the well-bore such that the well-bore is a seismic transmitter.

39. A method as defined in any of clauses 27 to 38, being used for determining an intersection of a first well-bore and a second well-bore in a subterranean region.

40. A relief well drilling method in a subterranean region using a drilling apparatus with a drill bit, the method comprising: using the method of any of clauses 27 to 39 to determine the location of the drill bit and directing the drill bit in response to said determined location in order that the drill bit will intersect an existing well-bore proximate a casing shoe thereof.

41. A method as defined in clause 40, wherein the predetermined seismic survey data is data generated by means of a mathematical model of the expected geological conditions within the subterranean region.

42. A method as defined in any of clauses 27 to 41, wherein a contrast gas or fluid is introduced into the wellbore to increase the reflectivity of the wellbore.

43. A subterranean drill monitoring apparatus comprising:

at least one seismic transmitter arranged to transmit seismic waves into a subterranean region from a position remote from a subterranean drill;

a plurality of seismic detectors arranged to detect a reflected and/or diffracted response from said seismic transmitter;

a processing apparatus arranged to carry out a method as defined in any of clauses 27 to 42; and

a display means arranged to output a visualisation of the location of the subterranean drill.

44. A subterranean drilling control apparatus comprising a data processor and visual display means wherein the processor is arranged to perform the method according to any of clauses 27 to 42 and to display on said display apparatus the path and instantaneous position of a drilling apparatus through and in the subterranean region.

45. A computer program product comprising computer implementable instructions for causing a programmable computer to carry out the method according to any of clauses 27 to 42.

## Claims

1. A method of locating a drilling apparatus comprising a drill string and a drill bit and/or a borehole in a subterranean region, comprising the steps of:

    (A) transmitting seismic waves (9) into the subterranean region during a subterranean drilling operation, the seismic waves being transmitted from a location remote from said drill string;
    (B) detecting a seismic response (13) from said drilling apparatus or borehole (5); and
    (C) comparing said detected response with predetermined seismic survey data of said subterranean region to determine the location of said apparatus or borehole.

2. A method as claimed in claim 1, wherein the seismic response is received at a location remote from said drilling apparatus or borehole, more preferably from a location generally above the drilling apparatus and/or borehole, and most preferably at a location on the surface of the subterranean region.

3. A method as claimed in claim 1 or 2, wherein the seismic waves (9) are transmitted from the surface of the subterranean region.

4. A method as claimed in claim 1 2, or 3, wherein the seismic waves (9) are transmitted into a well-bore extending from the surface of the subterranean region to a distal location of said drilling apparatus.

5. A method as claimed in any of claims 1 to 4, wherein a seismic data set is created, preferably during drilling, by detecting a seismic response in the form of:

(i) seeking/detecting prismatic waves caused by the seismic waves reflecting from geological boundaries within said region and the outer surface of the well-bore formed during the drilling operation; and/or

(ii) seeking/detecting diffracted waves generated, for example by reflections, from the point or points at which the well-bore intersects (passes through) geological boundaries,

and preferably wherein the step of comparing said detected seismic response comprises subtracting said seismic data set from predetermined seismic survey data in the form of a reference seismic data set wherein the reference seismic data-set is one of a data set determined before drilling or a previous seismic data set created during drilling.

6. A method as claimed in any of claims 1 to 5, wherein a seismic data set is created, preferably during drilling, by detecting a seismic response in the form of:

(iii) reflections from the bottom of the bore hole; and/or

(iv) seismic energy transmitted into the borehole at the surface and transported into the subsurface along the borehole and radiating back to remote receivers (e.g. at the earth surface) through the subsurface strata carrying information about the position of the drill bit and the borehole; and/or

(v) wave signals associated with reflections and/or refractions caused by a difference in acoustic impedance of the well-bore and the acoustic impedance of the subterranean strata surrounding the wellbore.

7. A method as claimed in any preceding claim wherein the step of comparing said detected response comprises the additional steps of:

seeking wave signals associated with reflections and/or refractions caused by a difference in acoustic impedance of the well-bore and the acoustic impedance of the subterranean strata surrounding the well-bore; and

optionally amplifying said signals to determine the position of the drilling apparatus.

8. A method as claimed in any preceding claim wherein a data processor is configured to receive the predetermined survey data and to compare said data with detected response data (13) from said transmitted seismic waves (9).

9. A method as claimed in any preceding claim being used for real-time monitoring of a subterranean drilling operation, wherein step (C) is used to plot a path of the drilling operation through a drilled region.

10. A method as claimed in any preceding claim being used for determining an intersection of a first well-bore and a second well-bore in a subterranean region.

11. A relief well drilling method in a subterranean region using a drilling apparatus with a drill bit, the method comprising: using the method of any preceding claim to determine the location of the drill bit and directing the drill bit in response to said determined location in order that the drill bit will intersect an existing well-bore proximate a casing shoe thereof, and preferably wherein the predetermined seismic survey data is data generated by means of a mathematical model of the expected geological conditions within the subterranean region.

12. A method as claimed in any preceding claim wherein a contrast gas or fluid is introduced into the wellbore to increase the reflectivity of the wellbore.

13. A subterranean drill monitoring apparatus comprising:

at least one seismic transmitter (8) arranged to transmit seismic waves (9) into a subterranean region from a position remote from a subterranean drill;

a plurality of seismic detectors (14) arranged to detect a reflected and/or diffracted response (13) from said seismic transmitter;

a processing apparatus arranged to carry out a method as claimed in any preceding claim; and

a display means arranged to output a visualisation of the location of the subterranean drill.

14. A subterranean drilling control apparatus comprising a data processor and visual display means wherein the processor is arranged to perform the method according to any of claims 1 to 12 and to display on said display apparatus the path and instantaneous position of a drilling apparatus through and in the subterranean region.

15. A computer program product comprising computer implementable instructions for causing a programmable computer of a subterranean drilling control apparatus as in claim 13 to carry out the method according to any of claims 1 to 12.

Fig. 1

Fig. 2

# Fig. 3

Reflection from well

# Fig. 4

Diffraction from well / layer boundary

## Fig. 5

## Fig. 6

# Fig. 7A

## Predrilling

```
┌─────────────────────┐
│ Conduct conventional│
│       survey        │
└─────────────────────┘
           │
           ▼
┌─────────────────────┐        ┌─────────────────────┐
│  Create geological  │───────▶│ Output for drilling │
│        map          │        │     real-time       │
│                     │        │      use (A)        │
└─────────────────────┘        └─────────────────────┘
           │
           ▼
┌─────────────────────┐
│ Identify formations │
└─────────────────────┘
           │
           ▼
┌──────────────────────────┐
│ Identify optimal drill path│
└──────────────────────────┘
```

# Fig. 7B

Drilling

# Fig. 8

Fig. 9

# Fig. 10

Arrangement for drilling of relief well into the reservoir using surface source and seabed receivers

31
32
Drillstring 33
35
36 Formation
Reservoir
Pressure (500 - 800 bar)
37
Marine Drilling Riser 34
Seismic Receivers 43b
39
Fluid leakage to sea
Casing 40
Casing Shoe 41
Water
Oil
Gas
Source
44
45
Seismic Receivers 43b
38
Open Hole Section 42
Seabed

# Fig. 11

# Fig. 12A

Horizontal CDP

| 1 | 2 | 3 | 4 | 5 | X | 1 | 2 | 3 | 4 | 5 | Surface |

Layer 1

X

Layer 2

# Fig. 12B

b

Borehole

| Surface | 3 | 2 | 3 | 2 | 1 |

Layer 1

Y

Layer 2

a

b = 2a

Europäisches
Patentamt

European
Patent Office

Office européen
des brevets

# EUROPEAN SEARCH REPORT

Application Number

EP 17 15 8446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 979 724 A (SILVERMAN DANIEL ET AL) 7 September 1976 (1976-09-07) * column 3, line 60; figure 6 * ----- | 1-15 | INV. E21B47/022 E21B47/09 E21B7/04 G01V1/42 |
| A | WO 03/036042 A1 (SCHLUMBERGER TECHNOLOGY BV [NL]; SCHLUMBERGER SERVICES PETROL [FR]; SC) 1 May 2003 (2003-05-01) * page 8, line 10 - line 11 * ----- | 1-15 | |
| A | GB 2 254 430 A (MARCONI GEC LTD [GB]) 7 October 1992 (1992-10-07) * the whole document * ----- | 1-15 | |

TECHNICAL FIELDS SEARCHED (IPC)

E21B
G01V

The present search report has been drawn up for all claims

| Place of search | Date of completion of the search | Examiner |
|---|---|---|
| Munich | 11 April 2018 | Ott, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 8446

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2018

| Patent document cited in search report | | Publication date | Patent family member(s) | | Publication date |
|---|---|---|---|---|---|
| US 3979724 | A | 07-09-1976 | NONE | | |
| WO 03036042 | A1 | 01-05-2003 | EA | 200400556 A1 | 26-08-2004 |
| | | | GB | 2399173 A | 08-09-2004 |
| | | | MX | PA04003065 A | 23-07-2004 |
| | | | NO | 20041568 A | 15-06-2004 |
| | | | US | 2004047234 A1 | 11-03-2004 |
| | | | WO | 03036042 A1 | 01-05-2003 |
| GB 2254430 | A | 07-10-1992 | NONE | | |

EPO FORM P0459

For more details about this annex : see Official Journal of the European Patent Office, No. 12/82